# EUROPÄISCHE PATENTSCHRIFT

(11) **EP 1 516 216 B1**
(45) Veröffentlichungstag und Bekanntmachung des Hinweises auf die Patenterteilung: **19.10.2005**
(21) Anmeldenummer: 03724765.7
(22) Anmeldetag: 30.05.2003
(51) Int. Cl.: G02B 6/38

(54) **Steckerteil für eine optische Setckverbindung**
Connector plug for an optical plug-in connection
Elément de connexion pour raccordement optique

(30) Priorität: 24.06.2002 CH 108402; 02.08.2002 CH 134902
(43) Veröffentlichungstag der Anmeldung: 23.03.2005
(73) Patentinhaber: Diamond SA, 6616 Losone (CH)
(72) Erfinder: DE MARCHI, Silverio, CH-6612 Ascona (CH)
(74) Vertreter: Wenger, René
(86) Internationale Anmeldenummer: PCT/CH2003/000339
(87) Internationale Veröffentlichungsnummer: WO 2004/001472

(56) Entgegenhaltungen:
- EP-A- 0 421 305
- US-A- 4 645 295
- US-A- 5 074 638
- US-A- 5 993 070

## Beschreibung

Die Erfindung betrifft ein Steckerteil für eine optische Steckverbindung gemäss dem Oberbegriff von Anspruch 1. Derartige Steckerteile werden werkseitig vormontiert, wobei die Verbindung mit dem eigentlichen Lichtwellenleiterkabel unter feldmässigen Bedingungen durch schweissung unmittelbar am Steckerteil erfolgt. Mit der Vormontage wird bezweckt, dass die schwierige Zentrierung und Fixierung des Lichtwellenleiters im Steckerstift unter geeigneteren Werkbedingungen durchgeführt werden kann.

Gattungsmässig vergleichbare Steckerteile sind beispielsweise durch die WO 96/31795 oder durch die EP 864 888 bekanntgeworden. Zum Ansetzen der Schweisselektroden sind dabei spezielle Öffnungen oder Aussparungen vorgesehen. Ein Nachteil der bekannten Steckerteile besteht darin, dass die Schweissstelle selbst schwer zugänglich ist und dass auch eine Beobachtung des Schweissvorgangs erschwert ist. Ausserdem ist der blanke Lichtwellenleiter im unmittelbaren Bereich der Schweissstelle nur unzulänglich geschützt und gegen Zugkräfte abgesichert. Es ist daher eine Aufgabe der Erfindung, ein Steckerteil der eingangs genannten Art zu schaffen, mit dessen Hilfe die Schweissoperation am Faserstummel möglichst ungehindert und bei guten Sichtbedingungen durchgeführt werden kann. Sowohl die Vormontage, als auch die Endmontage des Steckerteils sollen dabei schnell und ohne aufwendige Hilfsmittel durchführbar sein. Schliesslich soll die Schweissstelle nach der Endmontage optimal gegen mechanische Belastung und gegen Verschmutzung geschützt sein.

Diese Aufgabe wird erfindungsgemäss mit einem Steckerteil gelöst, das die Merkmale im Anspruch 1 aufweist. Der Steckerstift selbst kann dabei unabhängig von seiner Lagerung oder Beschaffenheit im Stiftaufnahmeabschnitt vormontiert werden. Das am Gelenk ausschwenkbare Mantelteil ermöglicht auf besonders einfache Weise eine Freilegung und damit eine Zugänglichkeit der Schweissstelle am Faserstummel. Die teilbare und um die Schweissstelle schliessbare Schutzhülse gewährleistet einen optimalen Schutz der Schweissstelle nach dem Schliessen des Mantelteils in die Schliessstellung.

Die Stifthalterung besteht vorteilhaft aus zwei Schalenteilen, die entlang der Längsmittelachse zusammensetzbar sind, wobei jedes Schalenteil ein schwenkbares Mantelteil aufweist und wobei die Schutzhülse ebenfalls aus zwei Hülsenschalen besteht, von denen jede auf der Innenseite eines Mantelteils befestigbar ist. Auf diese Weise werden mit der Schliessbewegung der beiden Mantelteile auch die Hülsenschalen der Schutzhülse geschlossen, wobei die vorgängige Befestigung auf der Innenseite der Mantelteile ebenfalls bereits werkseitig erfolgen kann. In bestimmten Fällen wäre es allerdings auch denkbar, die beiden Hülsenschalen mit einem sich in Längsrichtung erstreckenden Scharnier miteinander zu verbinden. Ausserdem müsste die Schutzhülse nicht zwingend vorgängig am Mantelteil befestigt sein.

Die schwenkbaren Mantelteile können gesamthaft den Kabelaufnahmeabschnitt bilden und am Gelenk mit dem Stiftaufnahmeabschnitt verbunden sein. Alternativ wäre es aber auch denkbar, dass das schwenkbare Mantelteil sich nur über eine Teillänge des Kabelaufnahmeabschnitts erstreckt.

Herstellungstechnisch ergeben sich besondere Vorteile, wenn die Stifthalterung aus zwei identischen Schalenteilen besteht, die auf einer durch die Längsmittelachse verlaufenden Ebene zusammensetzbar sind. Auf diese Weise müssen nicht unterschiedliche Typen von Schalenteilen hergestellt werden, weil die Stifthalterung mit zwei identischen Schalenteilen zusammenbaubar ist.

In bestimmten Fällen wäre es auch denkbar, dass wenigstens der Kabelaufnahmeabschnitt aus zwei, vorzugsweise identischen Schalenteilen besteht, die entlang der Längsmittelachse zusammensetzbar sind, wobei jedes Schalenteil das schwenkbare Mantelteil bildet, das am Gelenk mit dem Stiftaufnahmeabschnitt verbunden ist und wobei die Schutzhülse ebenfalls aus zwei Hülsenschalen besteht, von denen jede auf der Innenseite eines Mantelteils befestigbar ist. In einem derartigen Fall könnte die gesamte Stifthalterung einstückig ausgebildet sein, wobei der Steckerstift beispielsweise in den Stiftaufnahmeabschnitt eingegossen wird. Die Mantelteile werden derart einstückig an den Stiftaufnahmeabschnitt angegossen, dass sie bei der Montage zum Kabelaufnahmeabschnitt geschlossen werden können.

Für die Verbindung benachbarter Schalenteile können an ihren Berührungsflächen ineinandergreifende Vorsprünge und Ausnehmungen, insbesondere konische Zapfen und Zapfenöffnungen vorgesehen sein. Je nach der gewählten Konizität können die beiden Schalenteile durch leichten Druck zusammengefügt werden. Je nach Anordnung der Zapfen- und Zapfenöffnungen ermöglicht eine derartige Schnappverbindung auch ein Zusammenschnappen in bestimmten Sequenzen.

Um Spannungen an der Schweissstelle zu vermeiden ist es zweckmässig, wenn die Schutzhülse im Kabelaufnahmeabschnitt relativ zu diesem in Axialrichtung verschiebbar gelagert ist. Auf diese Weise werden auch Bewegungen ausgeglichen, die durch Kräfte auf den Steckerstift ausgelöst werden.

Eine optimale Lagerung der Schweissstelle am Lichtwellenleiter ergibt sich, wenn die beiden Hülsenschalen der Schutzhülse auf ihrer dem Lichtwellenleiter zugewandten Innenseite eine den Lichtwellenleiter aufnehmende Rinne aufweisen, die mit einem haftfähigen Material versehen ist. Die Rinne kann beispielsweise mit Silikonmaterial beschichtet sein, das den Lichtwellenleiter umschliesst.

Alternativ kann jedoch auch vor dem Schliessen der beiden Hülsenschalen ein Klebstoff auf den Lichtwellenleiter aufgetragen werden, der im geschlossenen Zustand eine feste Verbindung bewirkt.

Die beiden Hülsenschalen der Schutzhülse können ferner auf ihrer dem Lichtwellenleiter zugewandten Innenseite an den beiden Enden je einen Aufnahmeabschnitt aufweisen, der den Mantel eines Lichtwellenleiterkabels bzw. des Lichtwellenleiterstummels klemmend erfasst. Auf diese Weise wirkt die Schutzhülse als Zugentlastung für die blanke Schweissstelle, indem Zugkräfte vom Mantel des Lichtwellenleiterkabels auf den Mantel des Lichtwellenleiterstummels übertragen werden.

Weitere Vorteile bei der Endmontage können erzielt werden, wenn die beiden Hülsenschalen der Schutzhülse elastisch verformbar sind und wenn sie derart auf der Innenseite der Mantelteile fixierbar sind, dass ihre dem Lichtwellenleiter zugewandte Innenseiten konkav gekrümmt verlaufen und dass die Hülsenschalen in der Schliessstellung der Mantelteile durch Druck von Aussen zusammensetzbar sind. Die konkave Krümmung im vormontierten Zustand bewirkt, dass die oben erwähnten Aufnahmeabschnitte bei der Montage zuerst den Mantel des Lichtwellenleiterkabels bzw. des Lichtwellenleiterstummels erfassen, womit eine Belastung der Schweissstelle vermieden wird.

Die Hülsenschalen können, ähnlich wie die Mantelteile, an ihren Berührungsflächen ineinandergreifende Vorsprünge und Ausnehmungen, insbesondere Zapfen und Zapfenöffnungen aufweisen, welche derart angeordnet sind, dass sie im konkaven Zustand der Hülsenschalen noch nicht ineinandergreifen. Eine kraftschlüssige Verbindung findet somit erst beim Zusammendrücken von der Aussenseite her statt.

Diese Funktion wird noch weiter dadurch verbessert, dass jede Hülsenschale mit einem Einsteckkopf in einer korrespondierenden Öffnung im Mantelteil befestigt ist, wobei die Einsteckköpfe nach dem Zusammenpressen der Hülsenschalen zur axialen Freigabe der Schutzhülse aus den Öffnungen lösbar sind. Die Fixierung an den Einsteckköpfen ist somit nur vorübergehend und dient dazu, dass die Hülsenschalen bis zur Endmontage unverlierbar an den Mantelteilen befestigt sind.

Nach dem Lösen der Einsteckköpfe aus den Öffnungen kann sich die Schutzhülse in Axialrichtung verschieben. Dabei wird eine Verdrehsicherung besonders vorteilhaft dadurch erreicht, dass auf der Innenseite der Mantelteile eine sich an die Öffnung anschliessende und sich in Axialrichtung erstreckende Nut angeordnet ist, in welcher die Einsteckköpfe nach der axialen Freigabe der Schutzhülse verschiebbar sind.

Die Stifthalterung und die Schutzhülse bestehen vorteilhaft aus Kunststoffmaterial, wobei das Gelenk ein Filmscharnier ist. Es wäre aber ohne weiteres denkbar, insbesondere die Stifthalterung aus Metall zu fertigen, wobei das Gelenk ein mechanisches Schnappgelenk sein könnte.

Das erfindungsgemässe Steckerteil ermöglicht es auf besonders einfache Weise, den Steckerstift unter axialer Federvorspannung begrenzt verschiebbar im Stiftaufnahmeabschnitt zu lagern. Dadurch wird nicht nur die Endmontage, sondern auch die Vormontage vereinfacht und es können relativ einfach geformte Steckerstifte aus einem besonders harten Werkstoff wie Keramik oder Hartmetall eingesetzt werden.

Weitere Einzelmerkmale und Vorteile der Erfindung ergeben sich aus dem nachstehend beschriebenen Ausführungsbeispiel und aus den Zeichnungen. Es zeigen:
- Figur 1:: eine perspektivische Explosionszeichnung eines erfindungsgemässen Steckerteils,
- Figur 2:: das Steckerteil gemäss Figur 1 im vormontierten Zustand,
- Figur 3:: ein Querschnitt durch das vormontierte Steckerteil gemäss Figur 2,
- Figur 4:: ein Querschnitt durch das Steckerteil gemäss Figur 3 nach der Schweissoperation und kurz vor dem schliessen der Mantelteile,
- Figur 5:: das Steckerteil gemäss Figur 4 kurz vor dem endgültigen Schliessen der Mantelteile,
- Figur 6:: das Steckerteil gemäss Figur 5 bei ganz geschlossenen Mantelteilen aber noch geöffneten Hülsenschalen,
- Figur 7:: das Steckerteil gemäss Figur 6 beim Schliessen der Hülsenschalen,
- Figur 8:: das Steckerteil gemäss Figur 7 mit axial entkoppelter Schutzhülse und
- Figur 9:: eine perspektivische Darstellung eines fertig montierten Steckerteils kurz vor dem Einführen in ein Steckergehäuse

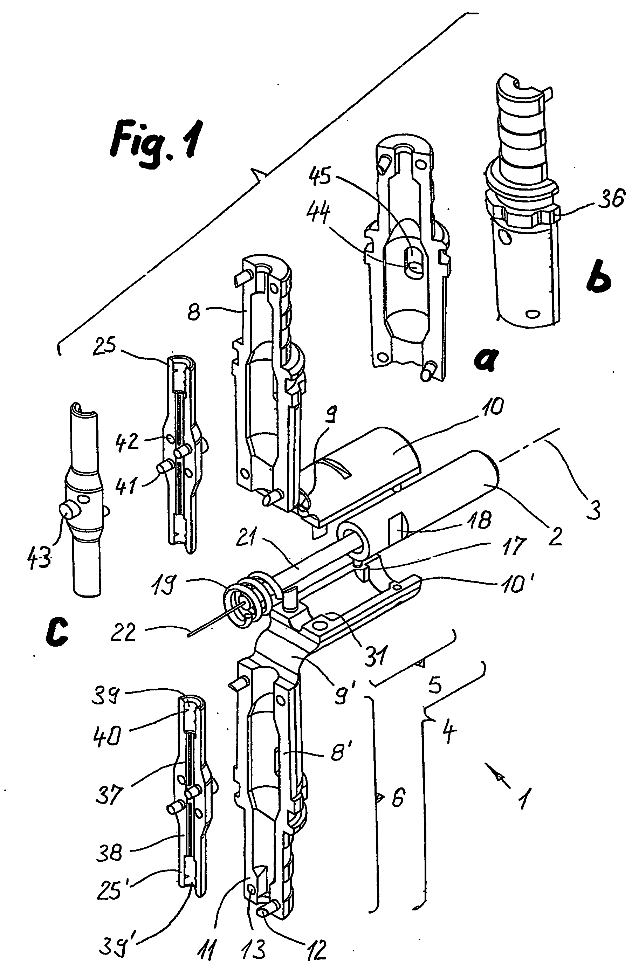

Wie in Figur 1 dargestellt, besteht ein gesamthaft mit 1 bezeichnetes Steckerteil im Wesentlichen aus einer gesamthaft mit 4 bezeichneten Stifthalterung und einem Steckerstift 2 aus einem in der Regel sehr harten Material, wie. z.B. Keramik oder Hartmetall. Die Stifthalterung selbst besteht wiederum aus zwei Schalenteilen 10, 10', welche auf einer durch eine Längsmittelachse 3 verlaufende Ebene zusammensetzbar sind. Schliesslich ist die Stifthalterung 4 (in geschlossenem Zustand) unterteilt in einen Stiftaufnahmeabschnitt 5 und einen Kabelaufnahmeabschnitt 6.

Die beiden Schalenteile 10, 10' bestehen beispielsweise aus Kunststoffmaterial, wobei sie aus spritzgiesstechnischen Gründen vorzugsweise in der gestreckten Lage gespritzt werden. Beide Schalenteile sind völlig identisch. Für die gegenseitige Verbindung sind an den gemeinsamen Berührungsflächen 11 konische Zapfen 12 bzw. korrespondierende Zapfenöffnungen 13 vorgesehen. Durch die hermaphroditische Anordnung dieser Verbindungsmittel kann die hülsenartige Stifthalterung 4 aus einem einzigen Typ der Schalenteile hergestellt werden.

Beim vorliegenden Ausführungsbeispiel bildet jedes Schalenteil 10, 10' über die gesamte Länge des Kabelaufnahmeabschnitts 6 je ein Mantelteil 8, 8' das mit je einem Filmscharnier 9, 9' mit dem Stiftaufnahmeabschnitt 5 verbunden ist. Die Mantelteile lassen sich dabei problemlos um ca. 90° zur Längsmittelachse 3 ausschwenken.

Der Steckerstift 2 ist an seinem Aussenmantel mit zwei Planparallelen Aussparungen 18 versehen. Ein Paar korrespondierende Rippen 17 auf der Innenseite des Stiftaufnahmeabschnitts 5 greifen in diese Aussparungen, wobei ein bestimmter Federweg in Richtung der Längsmittelachse 3 zugelassen ist. Eine Schraubendruckfeder 19 sorgt für die nötige axiale Vorspannung. Ein Lichtwellenleiterstummel 21 ist bereits fest mit dem Steckerstift 2 verbunden bzw. in diesem zentriert. Dieser Stummel verfügt über ein blankes, abisoliertes Ende 22.

Die perspektivische Detaildarstellung a zeigt das Mantelteil 8 in einer etwas weiter gedrehten Lage. Daraus ist ersichtlich, dass das Mantelteil mit einer durchgehenden Öffnung 44 versehen ist. An diese Öffnung schliesst sich auf der Innenseite eine Nut 45 an, welche sich in Axialrichtung erstreckt. Das Mantelteil 8' ist spiegelbildlich ausgebildet. In der perspektivischen Detaildarstellung b) ist das Mantelteil 8 um 180° gedreht. Aus dieser Perspektive sind auch die Positioniermittel 36 sichtbar, welche später der radialen Positionierung des Steckerteils in einem Steckergehäuse dienen.

Auf der Innenseite der beiden Mantelteile 8, 8' ist je eine Hülsenschale 25, 25' angeordnet. Die Detaildarstellung c zeigt die Hülsenschale 25 um 180° gedreht. Die beiden Hülsenschalen ergeben zusammen eine Schutzhülse. Eine derartige Schutzhülse weist, in Figur 1 jeweils hälftig sichtbar, an beiden Enden je einen Aufnahmeabschnitt 39 bzw. 39' auf. Auf der Innenseite dieses Aufnahmeabschnitts sind Zähne 40 angeordnet, welche sich beim Schliessen der beiden Hülsenschalen in die Ummantelung eines Lichtwellenleiters bohren. Auf der Innenseite 38 der Hülsenschalen sind ausserdem Zapfen 41 und Zapfenöffnungen 42 angeordnet und zwar nicht auf der Aussenseite, sondern im Zentrumsbereich. In Axialrichtung erstreckt sich eine Rinne 37, die beispielsweise mit einem Silikonmaterial beschichtet ist. Diese Rinne nimmt später den blanken Lichtwellenleiter mit der Schweissstelle auf. Anstelle des Silikonmaterials könnte auch eine Klebstoffschicht treten, die jedoch vorher auf den Lichtwellenleiter aufgetragen wurde.

Für die vorübergehende Fixierung mit den beiden Mantelteilen 8, 8' ist auf der Aussenseite der Hülsenschalen je ein Einsteckkopf 43 vorgesehen, welcher derart dimensioniert ist, dass er mit einem Haftsitz in der korrespondierenden Öffnung 44 haftet.

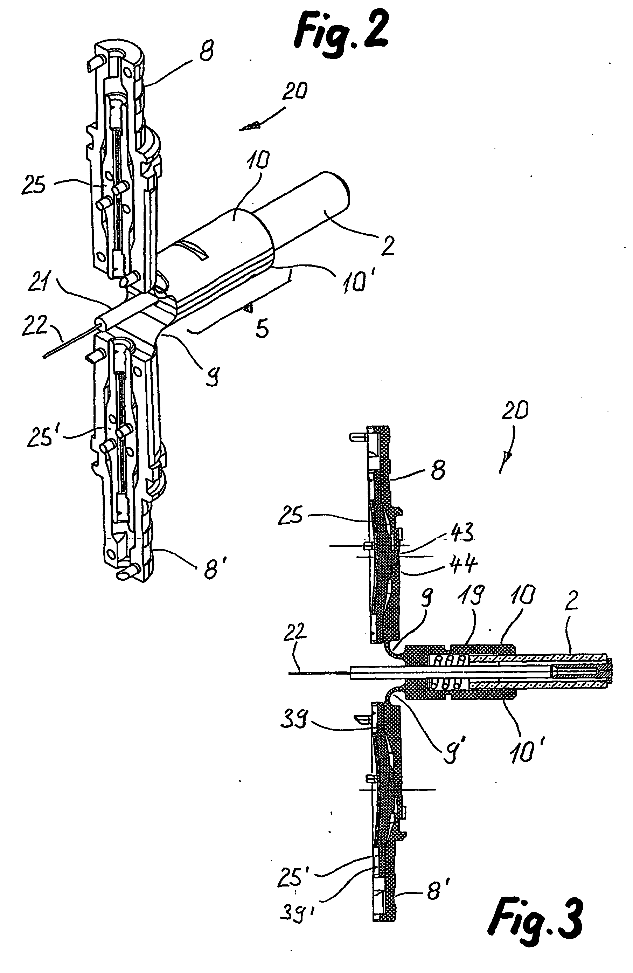

Die Figuren 2 und 3 zeigen das Steckerteil als vormontierte Einheit 20, bei welcher der Steckerstift 2 unverlierbar und axial federnd im Stiftaufnahmeabschnitt 5 eingeschlossen ist. Die Hülsenschalen 25 und 25' sind in die jeweiligen Mantelteile 8 und 8' eingesetzt und dort ebenfalls unverlierbar gehalten. Wie insbesondere aus Figur 3 ersichtlich ist, werden die beiden Hülsenschalen durch das Einstecken der Einsteckköpfe 43 in die Öffnungen 44 etwas deformiert, so dass sie konvex gekrümmt sind. Die Aufnahmeabschnitte 39, 39' sind dabei auf der Innenseite der Mantelteile 8, 8' abgestützt.

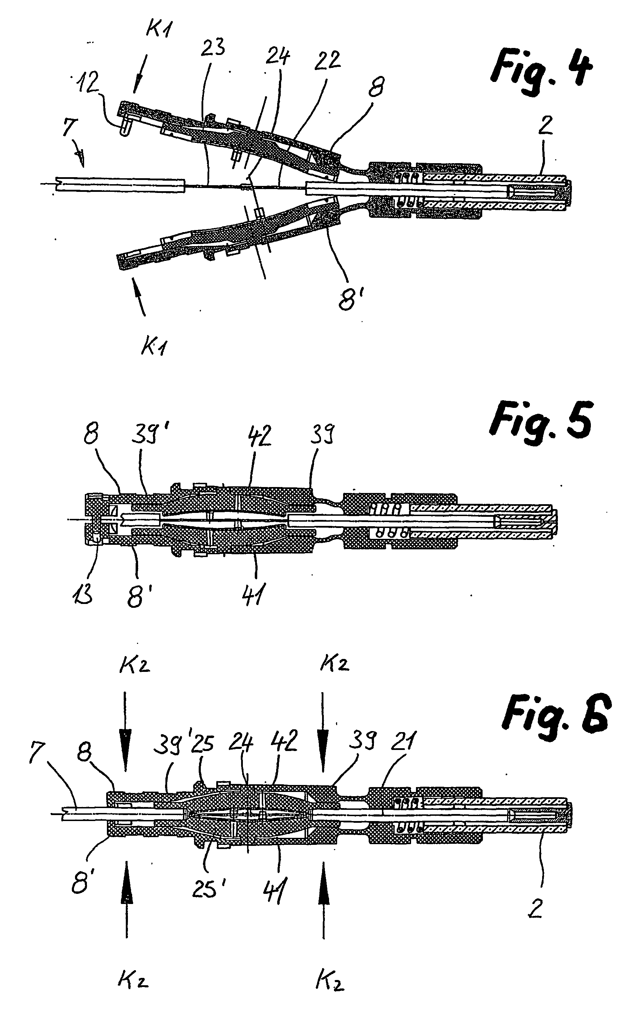

In diesem vormontierten Zustand wird nun das blanke Ende 22 des Lichtwellenleiterstummels 21 auf an sich bekannte Weise unter feldmässigen Bedingungen an das Ende 23 eines Lichtwellenleiterkabels 7 angeschweisst (Figur 4). Ersichtlicherweise wird dabei die Schweissoperation durch die aufgeschwenkten Mantelteile in keiner Weise behindert.

In Figur 4 ist die Schweissstelle 24 zwischen den blanken Lichtwellenleiterenden 22 und 23 symbolisch dargestellt. Nach der Schweissoperation werden die beiden Mantelteile 8, 8' zusammengeklappt, indem in Pfeilrichtung K1 von der Aussenseite her Kraft ausgeübt wird. Diese Schliessbewegung wird gemäss Figur 5 fortgesetzt, bis die Zapfen 12 in die Zapfenöffnungen 13 eingreifen. Wie dargestellt, wird das geschweisste Lichtwellenleiterkabel in diesem Zustand kraftmässig noch nicht beeinflusst.

Das endgültige Schliessen der beiden Mantelteile 8, 8' erfolgt gemäss Figur 6 durch Krafteinwirkung in Pfeilrichtung K2 an beiden Enden der Mantelteile. Dabei ergreifen die Aufnahmeabschnitte 39, 39' kraftschlüssig die Ummantelung (coating) des Lichtwellenleiterkabels 7 bzw. des Lichtwellenleiterstummels 21. Die beiden Hülsenschalen 25, 25' sind jedoch im zentralen Bereich der Schweissetelle 24 noch nicht miteinander verbunden, weil in Folge der konvexen Krümmung die Zapfen 41 noch nicht in die Zapfenöffnungen 42 eingreifen.

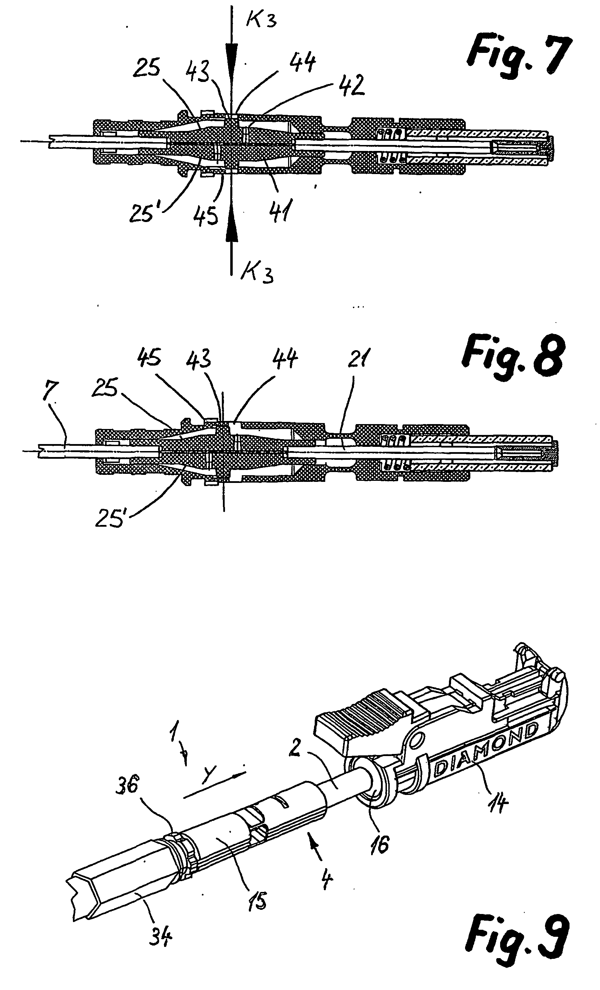

Erst jetzt wird gemäss Figur 7 von der Aussenseite her in Pfeilrichtung K3 Kraft auf das Zentrum der Hülsenschalen 25, 25' ausgeübt. Dabei dringen einerseits die Zapfen 41 in die Zapfenöffnungen 42 und andererseits lösen sich die Einsteckköpfe 43 aus den Öffnungen 44, so dass die Schutzhülse insgesamt in axialer Richtung entkoppelt wird.

Wie aus Figur 8 ersichtlich ist, kann sich die Schutzhülse 25, 25' jetzt in axialer Richtung zurückverschieben, wobei sich die Einsteckköpfe 43 in der Nut 45 bewegen und auf diese Weise eine Verdrehsicherung gewährleisten. Durch die einseitige Anordnung der Nut 45 ausgehend von der Öffnung 44 ist eine Verschiebung jedoch nur gegen die Kabelseite 7 hin möglich.

Für die Handhabung der optischen Steckverbindung ist in der Regel noch ein Steckergehäuse 14 erforderlich, wie es in Figur 9 dargestellt ist. Dieses sorgt für die Verankerung im Buchsenteil und für den Schutz der Stirnseite des Steckerstifts 2. Beim Ausführungsbeispiel verfügt die Stifthalterung 4 über einen konischen Abschnitt 15, der in eine Konusaufnahme 16 am Steckerteil eingepresst werden kann. Die winkelmässige Positionierung erfolgt dabei am Positioniermittel 36. Das Lichtwellenleiterkabel wird über eine Krimphülse 34 fest mit der Stifthalterung 4 verbunden.

## Patentansprüche

1. Steckerteil (1) für eine optische Steckverbindung, mit einem Steckerstift (2), in dem ein sich über eine Längsmittelachse (3) erstreckender Lichtwellenleiterstummel (21) gehalten ist und mit einer hülsenartigen Stifthalterung (4) mit einem Stiftaufnahmeabschnitt (5), in dem der Steckerstift gehalten ist und mit einem Kabelaufnahmeabschnitt (6), an dem das Ende eines Lichtwellenleiterkabels (7) zugfest fixierbar ist, wobei der Lichtwellenleiterstummel mit dem kabelseitigen Lichtwellenleiterende (23) verschweissbar ist, **dadurch gekennzeichnet, dass** der Kabelaufnahmeabschnitt (6) wenigstens ein Mantelteil (8, 8') aufweist, das an einem Gelenk (9) um einen bestimmten Schwenkwinkel zwischen einer Öffnungsstellung und einer Schliessstellung schwenkbar ist, wobei das zu verschweissende Ende (22) des Lichtwellenleiterstummels (21) im Schwenkbereich des Mantelteils liegt und dass innerhalb des Kabelaufnahmeabschnitts (6) eine teilbare Schutzhülse (25, 25') angeordnet ist, welche um die Schweissstelle schliessbar ist.

2. Steckerteil nach Anspruch 1, **dadurch gekennzeichnet, dass** die Stifthalterung (4) aus zwei Schalenteilen (10, 10') besteht, die entlang der Längsmittelachse (3) zusammensetzbar sind, wobei jedes Schalenteil ein schwenkbares Mantelteil (8, 8') aufweist und wobei die Schutzhülse ebenfalls aus zwei Hülsenschalen (25, 25') besteht, von denen jede auf der Innenseite eines Mantelteils befestigbar ist.

3. Steckerteil nach Anspruch 2, **dadurch gekennzeichnet, dass** die beiden Mantelteile (8, 8') gesamthaft den Kabelaufnahmeabschnitt (6) bilden und am Gelenk (9) mit dem Stiftaufnahmeabschnitt (5) verbunden sind.

4. Steckerteil nach Anspruch 2 oder 3, **dadurch gekennzeichnet, dass** die Stifthalterung (4) aus zwei identischen Schalenteilen (10, 10') besteht, die auf einer durch die Längsmittelachse (3) verlaufenden Ebene zusammensetzbar sind.

5. Steckerteil nach Anspruch 1, **dadurch gekennzeichnet, dass** wenigstens der Kabelaufnahmeabschnitt (6) aus zwei vorzugsweise identischen Schalenteilen besteht, die entlang der Längsmittelachse (3) zusammensetzbar sind, wobei jedes Schalenteil das schwenkbare Mantelteil (8, 8') bildet, das am Gelenk (9) mit dem Stiftaufnahmeabschnitt (5) verbunden ist und wobei die Schutzhülse ebenfalls aus zwei Hülsenschalen (25, 25') besteht, von denen jede auf der Innenseite des Mantelteils befestigbar ist.

6. Steckerteil nach einem der Ansprüche 2 bis 5, **dadurch gekennzeichnet, dass** benachbarte Schalenteile (10, 10') an ihren Berührungsflächen (11) ineinandergreifende Vorsprünge und Ausnehmungen, insbesondere Zapfen (12) und Zapfenöffnungen (13) aufweisen.

7. Steckerteil nach einem der Ansprüche 2 bis 6, **dadurch gekennzeichnet, dass** die Schutzhülse (25, 25') im Kabelaufnahmeabschnitt (6) relativ zu diesem in Axialrichtung verschiebbar gelagert ist.

8. Steckerteil nach einem der Ansprüche 2 bis 7, **dadurch gekennzeichnet, dass** die beiden Hülsenschalen (25, 25') der Schutzhülse auf ihrer dem Lichtwellenleiter zugewandten Innenseite (38) eine den Lichtwellenleiter aufnehmende Rinne (37) aufweisen, die mit einem haftfähigen Material versehen ist.

9. Steckerteil nach einem der Ansprüche 2 bis 8, **dadurch gekennzeichnet, dass** die beiden Hülsenschalen (25, 25') der Schutzhülse auf ihrer dem Lichtwellenleiter zugewandte Innenseite (38) an den beiden Enden je einen Aufnahmeabschnitt (39, 39') aufweisen, der den Mantel eines Lichtwellenleiterkabels bzw. des Lichtwellenleiterstummels klemmend erfasst.

10. Steckerteil nach einem der Ansprüche 2 bis 9, **dadurch gekennzeichnet, dass** die beiden Hülsenschalen (25, 25') der Schutzhülse elastisch verformbar sind und dass sie derart auf der Innenseite der Mantelteile (8, 8') fixierbar sind, dass ihre dem Lichtwellenleiter zugewandte Innenseiten (38) konkav gekrümmt verlaufen und dass die Hülsenschalen in der Schliessstellung der Mantelteile durch Druck von Aussen zusammensetzbar sind.

11. Steckerteil nach Anspruch 10, **dadurch gekennzeichnet, dass** die Hülsenschalen (25, 25') an ihren Berührungsflächen (38) ineinandergreifende Vorsprünge und Ausnehmungen, insbesondere Zapfen (41) und Zapfenöffnungen (42) aufweisen, welche derart angeordnet sind, dass sie im konkav gekrümmten Zustand der Hülsenschalen noch nicht ineinandergreifen.

12. Steckerteil nach Anspruch 7 und einem der Ansprüche 10 oder 11, **dadurch gekennzeichnet, dass** jede Hülsenschale (25, 25') mit einem Einsteckkopf (43) in einer korrespondierenden Öffnung (44) im Mantelteil befestigt ist, wobei die Einsteckköpfe nach dem Zusammenpressen der Hülsenschalen zur axialen Freigabe der Schutzhülse aus den Öffnungen lösbar sind.

13. Steckerteil nach Anspruch 12, **dadurch gekennzeichnet, dass** auf der Innenseite der Mantelteile (8, 8') eine sich an die Öffnung (44) anschliessende und sich in Axialrichtung erstreckende Nut (45) angeordnet ist und dass die Einsteckköpfe (43) nach der axialen Freigabe der Schutzhülse zur Verdrehsicherung in der Nut verschiebbar sind.

14. Steckerteil nach einem der Ansprüche 1 bis 13, **dadurch gekennzeichnet, dass** die Stifthalterung und die Schutzhülse aus Kunststoffmaterial bestehen und dass das Gelenk ein Filmscharnier ist.

15. Steckerteil nach einem der Ansprüche 1 bis 14, **dadurch gekennzeichnet, dass** der Steckerstift (2) unter axialer Federvorspannung begrenzt verschiebbar im Stiftaufnahmeabschnitt (5) gelagert ist.

## Claims

1. Plug part (1) for an optical plug-in connection, having a plug pin (2), in which an optical waveguide stub (21) is held which extends over a longitudinal central axis (3), and having a sleeve-like pin holder (4) having a pin-accommodating section (5), in which the plug pin is held, and having a cable-accommodating section (6) to which the end of an optical waveguide cable (7) can be fixed with high tensile stress, it being possible for the optical waveguide stub to be welded to the cable-side optical waveguide end (23), **characterized in that** the cable-accommodating section (6) has at least one sheath part (8, 8') which can be pivoted on an articulated joint (9) about a specific pivoting angle between an open position and a closed position, the end (22), to be welded, of the optical waveguide stub (21) lying in the pivoting range of the sheath part, and **in that** a protective sleeve (25, 25'), which can be split and can be closed around the weld point, is arranged within the cable-accommodating section (6).

2. Plug part according to Claim 1, **characterized in that** the pin holder (4) comprises two shell parts (10, 10') which can be joined together along the longitudinal central axis (3), each shell part having a sheath part (8, 8') which can be pivoted, and the protective sleeve likewise comprising two sleeve shells (25, 25'), each of which can be fixed to the inside of one sheath part.

3. Plug part according to Claim 2, **characterized in that** the two sheath parts (8, 8') together form the cable-accommodating section (6) and are connected at the articulated joint (9) to the pin-accommodating section (5).

4. Plug part according to Claim 2 or 3, **characterized in that** the pin holder (4) comprises two identical shell parts (10, 10') which can be joined together on a plane which extends through the longitudinal central axis (3).

5. Plug part according to Claim 1, **characterized in that** at least the cable-accommodating section (6) comprises two preferably identical shell parts which can be joined together along the longitudinal central axis (3), each shell part forming the sheath part (8, 8') which can be pivoted and is connected at the articulated joint (9) to the pin-accommodating section (5), and the protective sleeve likewise comprising two sleeve shells (25, 25'), each of which can be fixed to the inside of the sheath part.

6. Plug part according to one of Claims 2 to 5, **characterized in that** adjacent shell parts (10, 10') have, on their touching faces (11), interengaging projections and cutouts, in particular journals (12) and journal openings (13).

7. Plug part according to one of Claims 2 to 6, **characterized in that** the protective sleeve (25, 25') is mounted in the cable-accommodating section (6) such that it can be displaced in relation to said cable-accommodating section (6) in the axial direction.

8. Plug part according to one of Claims 2 to 7, **characterized in that** the two sleeve shells (25, 25') of the protective sleeve have, on their inside (38) which faces the optical waveguide, a channel (37) which accommodates the optical waveguide and is provided with an adhesive material.

9. Plug part according to one of Claims 2 to 8, **characterized in that** the two sleeve shells (25, 25') of the protective sleeve have, on their inside (38) which faces the optical waveguide, an accommodating section (39, 39') at each of the two ends, said accommodating section (39, 39') gripping the sheath of an optical waveguide cable or of the optical waveguide stub in a clamping manner.

10. Plug part according to one of Claims 2 to 9, **characterized in that** the two sleeve shells (25, 25') of the protective sleeve are elastically deformable, and **in that** they can be fixed on the inside of the sheath parts (8, 8') such that their insides (38) which face the optical waveguide extend with a concave curvature, and **in that** the sleeve shells can be joined together in the closed position of the sheath parts by means of pressure from the outside.

11. Plug part according to Claim 10, **characterized in that** the sleeve shells (25, 25') have, on their touching faces (38), interengaging projections and cutouts, in particular journals (41) and journal openings (42) which are arranged such that they do not yet engage with one another in the concavely curved state of the sleeve shells.

12. Plug part according to Claim 7 and according to either of Claims 10 and 11, **characterized in that** each sleeve shell (25, 25') is fixed in the sheath part with an insertion head (43) in a corresponding opening (44), it being possible for the insertion heads to be released from the openings once the sleeve shells have been pushed together for the purpose of axially releasing the protective sleeve.

13. Plug part according to Claim 12, **characterized in that** a groove (45), which is adjacent to the opening (44) and extends in the axial direction, is arranged on the inside of the sheath parts (8, 8'), and **in that** the insertion heads (43) can be displaced in the groove once the protective sleeve has been axially released so as to secure against rotation.

14. Plug part according to one of Claims 1 to 13, **characterized in that** the pin holder and the protective sleeve are made from a plastic material, and **in that** the articulated joint is a film hinge.

15. Plug part according to one of Claims 1 to 14, **characterized in that** the plug pin (2) is mounted in the pin-accommodating section (5) such that it can be displaced to a limited extent under axial spring prestress.

## Revendications

1. Elément connecteur (1) pour une connexion optique, comprenant une broche (2) dans laquelle est maintenu un bout de guide d'ondes optique (21) qui s'étend sur un axe médian longitudinal (3), et une fixation de broche en forme de douille (4) avec une section de réception de broche (5) dans laquelle est maintenue la broche et avec une section de réception de câble (6) à laquelle l'extrémité d'un câble de guide d'ondes optique (7) peut être fixée pour résister à la traction, le bout de guide d'ondes optique étant apte à être soudé sur l'extrémité de guide d'ondes optique (23) prévue côté câble, **caractérisé en ce que** la section de réception de câble (6) présente au moins un élément formant gaine (8, 8') qui est apte à pivoter au niveau d'une articulation (9) suivant un angle de pivotement défini, entre une position ouverte et une position fermée, l'extrémité à souder (22) du bout de guide d'ondes optique (21) étant située dans la zone de pivotement de l'élément formant gaine, et **en ce qu'**il est prévu à l'intérieur de la section de réception de câble (6) une douille de protection divisible (25, 25') qui est apte à être fermée autour de la soudure.

2. Elément connecteur selon la revendication 1, **caractérisé en ce que** la fixation de broche (4) se compose de deux éléments formant coques (10, 10') qui sont aptes à être assemblés le long de l'axe médian longitudinal (3), chaque élément formant coque présentant un élément formant gaine (8, 8') apte à pivoter et la douille de protection se composant elle aussi de deux coques (25, 25') aptes à être fixées sur le côté intérieur des éléments formant gaines respectifs.

3. Elément connecteur selon la revendication 2, **caractérisé en ce que** les deux éléments formant gaines (8, 8') forment globalement la section de réception de câble (6) et sont reliés au niveau de l'articulation (9) à la section de réception de broche (5).

4. Elément connecteur selon la revendication 2 ou 3, **caractérisé en ce que** la fixation de broche (4) se compose de deux éléments formant coques (10, 10') identiques qui sont aptes à être assemblés sur un plan qui traverse l'axe médian longitudinal (3).

5. Elément connecteur selon la revendication 1, **caractérisé en ce que** la section de réception de câble (6), au moins, se compose de deux éléments formant coques de préférence identiques qui sont aptes à être assemblés le long de l'axe médian longitudinal (3), chacun de ces éléments définissant l'élément formant gaine pivotant (8, 8') qui est relié au niveau de l'articulation (9) à la section de réception de broche (5), et la douille de protection se composant elle aussi de deux coques de douille (25, 25') qui sont aptes à être fixées sur le côté intérieur des éléments formant gaines respectifs.

6. Elément selon l'une des revendications 2 à 5, **caractérisé en ce que** des éléments formant coques (10, 10') voisins présentent sur leurs surfaces de contact (11) des saillies et des creux qui s'emboîtement mutuellement, en particulier des chevilles (12) et des ouvertures pour cheville (13).

7. Elément selon l'une des revendications 2 à 6, **caractérisé en ce que** la douille de protection (25, 25') est montée dans la section de réception de câble (6) de manière à être mobile dans le sens axial par rapport à celle-ci.

8. Elément selon l'une des revendications 2 à 7, **caractérisé en ce que** les deux coques (25, 25') de la douille de protection présentent sur leur côté intérieur (38) tourné vers le guide d'ondes optique une gorge (37) qui reçoit ce dernier et qui est pourvue d'une matière adhésive.

9. Elément selon l'une des revendications 2 à 8, **caractérisé en ce que** les deux coques (25, 25') de la douille de protection présentent sur leur côté intérieur (38) tourné vers le guide d'ondes optique, à chaque extrémité, une section de réception (39, 39') qui bloque par serrage la gaine d'un câble de guide d'ondes optique ou du bout de guide d'ondes optique.

10. Elément connecteur selon l'une des revendications 2 à 9, **caractérisé en ce que** les deux coques (25, 25') de la douille de protection sont déformables élastiquement et **en ce qu'**elles sont aptes à être fixées sur le côté intérieur des éléments formant gaines (8, 8') de telle sorte que leur côté intérieur (38) tourné vers le guide d'ondes optique ait une forme concave, et **en ce que** les coques de douille sont aptes à être assemblées dans la position fermée des éléments formant gaines grâce à une pression de l'extérieur.

11. Elément connecteur selon la revendication 10, **caractérisé en ce que** les coques de douille (25, 25') présentent sur leurs surfaces de contact (38) des saillies et des creux qui s'emboîtent mutuellement, en particulier des chevilles (41) et des ouvertures pour cheville (42), qui sont disposées de manière à ne pas encore s'emboîter quand les coques de douille sont en position concave.

12. Elément connecteur selon la revendication 7 et selon la revendication 10 ou 11, **caractérisé en ce que** chaque coque de douille (25, 25') est fixée avec une tête d'emboîtement (43) dans une ouverture correspondante (44) de l'élément formant gaine, les têtes d'emboîtement, après l'assemblage des coques de douilles, étant aptes à être détachées des ouvertures en vue du déblocage axial de la douille de protection.

13. Elément connecteur selon la revendication 12, **caractérisé en ce qu'**il est prévu sur le côté intérieur des éléments formant gaines (8, 8') une rainure (45) qui fait suite à l'ouverture (44) et qui s'étend dans le sens axial, et **en ce que** les têtes d'emboîtement (43), après le déblocage axial de la douille de protection, sont mobiles dans la rainure pour empêcher une torsion.

14. Elément connecteur selon l'une des revendications 1 à 13, **caractérisé en ce que** la fixation de broche et la douille de protection se composent d'une matière plastique et **en ce que** l'articulation est une charnière en forme de film.

15. Elément connecteur selon l'une des revendications 1 à 14, **caractérisé en ce que** la broche (2) est montée dans la section de réception de broche (5) avec une mobilité limitée, en étant soumise à une contrainte élastique axiale.
